# EUROPÄISCHE PATENTSCHRIFT

(11) **EP 2 209 663 B1**
(45) Veröffentlichungstag und Bekanntmachung des Hinweises auf die Patenterteilung: **11.05.2011**
(21) Anmeldenummer: 08842821.4
(22) Anmeldetag: 16.10.2008
(51) Int. Cl.: B60K 37/06, B60K 37/00

(54) **DIALOGSYSTEM**
DIALOGUE SYSTEM
SYSTÈME DE DIALOGUE

(30) Priorität: 25.10.2007 DE 102007051014
(43) Veröffentlichungstag der Anmeldung: 28.07.2010
(73) Patentinhaber: Bayerische Motoren Werke Aktiengesellschaft, 80809 München (DE)
(72) Erfinder: KUENZNER, Hermann, 85356 Freising (DE)
(74) Vertreter: Kammermeier, Peter Frank
(86) Internationale Anmeldenummer: PCT/EP2008/008745
(87) Internationale Veröffentlichungsnummer: WO 2009/052986

(56) Entgegenhaltungen:
- EP-A- 1 130 560
- DE-A1- 10 009 727
- DE-A1- 19 944 324
- DE-A1-102005 016 006

## Beschreibung

Die Erfindung betrifft ein Dialogsystem für ein Kraftfahrzeug mit einer Mehrzahl von Bedientasten, von denen zumindest eine mit einer Funktion aus einer vorgegebenen Menge von Funktionen derart belegbar ist, dass diese Funktion bei Betätigung dieser Bedientaste ausgeführt wird.

Ein solches Dialogsystem ist beispielsweise bekannt aus der DE 10 2004 058 954 A1 oder DE 100 09 727 A1. Gewöhnlich sind die Bedientasten eines solchen Dialogsystems belegbar mit Navigationszielen, Telefonnummern, Radiosendern und/oder Audio-Quellen. Streng genommen stellen die genannten Belegungsgrößen (Navigationsziele, Telefonnummern bzw. Radiosender) einen Parameter einer auszuführenden Funktion dar. Beispielsweise soll schließlich bei Betätigung einer Bedientaste, die mit einem Navigationsziel belegt ist, eine Zielführung (= Funktion) zu dem Navigationsziel (= Parameter) gestartet werden. Je nach technischer Umsetzung kann der Bedientaste nur der Parameter zugeordnet werden und die geeignete Funktion wird anhand der Kategorie des Parameters bei Betätigung der Bedientaste bestimmt (z.B. Zielführung im Falle eines Navigationszieles) oder es werden sowohl die Funktion als auch der Parameter der Bedientaste zugeordnet. Auch Dialogsysteme, bei denen einer Bedientaste informationstechnisch lediglich ein solcher Parameter zugeordnet wird, sind der eingangs genannten Gattung insofern zuzurechnen, als ihnen durch die Kategorie des Parameters faktisch auch eine zu dessen Verwertung geeignete Funktion zugeordnet ist.

Es ist eine Aufgabe der Erfindung, ein Dialogsystem zu schaffen, das zumindest eine weitere vorteilhafte Art der Belegung einer Bedientaste erlaubt.

Gelöst wird diese Aufgabe durch ein Dialogsystem mit den Merkmalen des Anspruchs 1. Vorteilhafte Ausführungsformen und Weiterbildungen der Erfindung ergeben sich aus den abhängigen Ansprüchen.

Die Erfindung erlaubt die Belegung der Bedientasten des Dialogsystems bzw. zumindest einer Bedientaste des Dialogsystems mit Funktionen, deren Ausführung die vorherige Bestimmung zumindest eines aktuellen das Kraftfahrzeug betreffenden Parameters erfordert. Insbesondere sind viele bei Kraftfahrzeugnutzern beliebte und häufig genutzte Funktionen von der aktuellen Position des Kraftfahrzeugs abhängig. Die Erfindung erlaubt die Belegung einer Bedientaste mit solchen Funktionen. Beispielsweise kann bei einem Dialogsystem, das eine bevorzugte Ausführungsform der vorliegenden Erfindung darstellt, eine Bedientaste mit einer Suche nach Parkgelegenheiten in einem bestimmten Umkreis um die aktuelle Position des Kraftfahrzeugs belegt werden.

Erfindungsgemäß ist zumindest eine der Funktionen, mit denen eine Bedientaste belegbar ist, als übergeordnete Funktion ausgebildet, bei deren Ausführung zunächst der Wert zumindest eines mit zumindest einem Zustand des Kraftfahrzeugs korrelierten Parameters einer untergeordneten Funktion bestimmt wird und anschließend die untergeordnete Funktion in Abhängigkeit von diesem Wert ausgeführt wird.

Durch die erstgenannte Konsequenz der Ausführung der übergeordneten Funktion, nämlich die Bestimmung des Parameter-Werts, wird gewissermaßen der prinzipbedingte Nachteil eliminiert, den Funktionen, deren Ausführung das Bekanntsein zumindest eines aktuellen Werts eines das Kraftfahrzeug betreffenden Parameters erfordert, gegenüber Funktionen besitzen, die nicht von solchen Aktualitätsanforderungen geprägt sind.

Durch die zweitgenannte Konsequenz der Ausführung der übergeordneten Funktion, nämlich die Ausführung der untergeordneten Funktion in Abhängigkeit von dem zuvor bestimmten Parameter-Wert, erfüllt das Dialogsystem schließlich die Erwartungshaltung des Bedieners, nämlich die Ausführung des aus seiner Sicht durch einen einzigen Tastendruck erteilten Kommandos.

Die erfindungsgemäße Struktur der Überordnung einer ersten übergeordneten Funktion über eine zweite untergeordnete Funktion ermöglicht es dem Bediener, durch einen einzigen Tastendruck faktisch zumindest zwei Aktionen des Dialogsystems auszulösen, nämlich zum einen die Bestimmung des Parameter-Werts und zum anderen die Ausführung der untergeordneten Funktion auf Basis des zuvor bestimmten Parameter-Werts.

Gemäß einer bevorzugten Ausführungsform der vorliegenden Erfindung ist der Zustand des Kraftfahrzeugs, mit dem der Parameter korreliert, dessen aktueller Wert zunächst bestimmt wird, die absolute Position des Kraftfahrzeugs. Viele nützliche Funktionen zur Information des Fahrers eines Kraftfahrzeugs hängen von der aktuellen Position des Kraftfahrzeugs ab.

Gemäß einer ersten Variante der Erfindung wird die Bestimmung der absoluten Position des Kraftfahrzeugs bei Ausführung der übergeordneten Funktion komplett neu angestoßen und auf der Basis geeigneter Sensoren durchgeführt werden.

Gemäß einer alternativen zweiten Variante der Erfindung wird zur Bestimmung der absoluten Position des Kraftfahrzeugs hingegen lediglich auf einen bereits bei dem Kraftfahrzeug vorliegenden Parameter-Wert zugegriffen, der die aktuelle absolute Position des Kraftfahrzeugs angibt bzw. charakterisiert. Beispielsweise wird bei vielen mit einem Navigationssystem ausgerüsteten Kraftfahrzeugen zumindest dann, wenn das Navigationssystem aktiviert ist, ohnehin laufend die absolute Position des Kraftfahrzeugs ermittelt. Die Bestimmung der absoluten Position des Kraftfahrzeugs, die im Rahmen der Erfindung stattfindet, kann sich demnach darauf beschränken, auf das Ergebnis dieser Ermittlung oder ein Derivat dieses Ergebnisses zuzugreifen.

Gemäß einer wiederum alternativen dritten Variante der Erfindung kann auch veranlasst werden, dass eine andere Kraftfahrzeugeinrichtung, beispielsweise ein Navigationssystem oder ein Ortungssystem, eine Bestimmung der absoluten Position des Kraftfahrzeugs durchführt, um anschließend das Ergebnis dieser Bestimmung nutzen zu können.

Gemäß einer besonders bevorzugten Ausführungsform der vorliegenden Erfindung ist die untergeordnete Funktion als Suche in elektronischen Kartendaten nach zumindest einem Sonderziel in einem bestimmten Umkreis um die absolute Position des Kraftfahrzeugs definiert. Beispielsweise kann so nach Parkgelegenheiten in einem bestimmten Umkreis um die absolute Position des Kraftfahrzeugs gesucht werden. Auch die Möglichkeit der Belegung einer Bedientaste mit einer Suche nach Restaurants und/oder Hotels und/oder Tankstellen und/oder Sehenswürdigkeiten in einem bestimmten Umkreis um die absolute Position des Kraftfahrzeugs ist als vorteilhaft zu erachten.

Gemäß einer vorteilhaften Weiterbildung der Erfindung ist die untergeordnete Funktion in Abhängigkeit vom Wert zumindest eines weiteren Parameters ausführbar. Bei dem weiteren Parameter kann es sich insbesondere um einen Parameter handeln, der als Kenngröße eines beschränkten Umfelds um die aktuelle Position des Kraftfahrzeugs ausgebildet ist, beispielsweise als Radius eines Umkreises. Diese Weiterbildung der Erfindung schafft zusätzlich zur Flexibilität der Funktionsausführung hinsichtlich der aktuellen Position des Kraftfahrzeugs eine Flexibilität hinsichtlich des Werts des zumindest einen weiteren Parameters.

Diese Flexibilität kann für den Bediener nutzbar gemacht werden, indem das Dialogsystem so ausgeführt wird, dass ein Wert des zumindest einen weiteren Parameters von dem Bediener einstellbar ist und der vom Bediener eingestellte Wert der übergeordneten Funktion und/oder der Bedientaste derart zuordenbar ist, dass der Wert bei Betätigung der Bedientaste zur Ausführung der untergeordneten Funktion zur Verfügung steht. Somit muss der Wert des weiteren Parameters nicht bei jeder Betätigung der Bedientaste eigens vom Bediener abgefragt werden. Die Betätigung der Bedientaste ruft vielmehr spontan das vom Bediener gewünschte Ergebnis hervor, weil einfach der durch die genannte Zuordnung zur Verfügung stehende Wert verwendet wird. Dennoch hat der Bediener grundsätzlich die Möglichkeit, den Wert des Parameters zu modifizieren und so seinen Bedürfnissen und/oder Vorlieben anzupassen.

Die Einstellung des Parameter-Werts durch den Bediener kann beispielsweise menübasiert erfolgen, vorzugsweise im Rahmen einer hierarchischen Menüstruktur, mit welcher der Bediener über ein multifunktionales Bedienelement interagiert, das als Dreh-/Drucksteller ausgebildet sein kann.

Eine Zuordnung des vom Bediener eingestellten Werts zu der übergeordneten Funktion kann beispielsweise selbsttätig vom Dialogsystem vorgenommen werden, indem bei Belegung der Bedientaste mit der übergeordneten Funktion (die beispielsweise in an sich bekannter Weise durch einen Tasten-Langdruck oder durch ein dediziertes Konfigurationsmenü erfolgen kann) der aktuell, beispielsweise menübasiert, eingestellte Wert des weiteren Parameters bestimmt wird und das Ergebnis dieser Bestimmung der übergeordneten Funktion als bei Ausführung zu verwertende Eingangsgröße zugewiesen wird.

Eine Zuordnung des vom Bediener eingestellten Werts zu der Bedientaste kann beispielsweise selbsttätig vom Dialogsystem vorgenommen werden, indem bei Belegung der Bedientaste mit der übergeordneten Funktion der aktuell eingestellte Wert des weiteren Parameters bestimmt wird und das Ergebnis dieser Bestimmung zusätzlich zu der übergeordneten Funktion der Bedientaste zugeordnet wird. Beispielsweise können ein Zeiger auf die übergeordnete Funktion und der Wert des Parameters gemeinsam an entsprechender Stelle einer Speichereinheit abgelegt werden.

Vorzugsweise bleibt der Parameter-Wert, welcher der übergeordneten Funktion und/oder der Bedientaste gemäß einer der genannten Varianten oder auf ähnliche Art und Weise zugeordnet wurde, auch dann unverändert erhalten, wenn der Wert des weiteren Parameters vom Bediener später verändert wird. Der übergeordneten Funktion und/oder der Bedientaste ist und bleibt also der Wert des weiteren Parameters zum Zeitpunkt der Belegung der Bedientaste mit der übergeordneten Funktion zugeordnet. Dies hat für den Bediener den Vorteil, dass eine Betätigung der Bedientaste unabhängig von späteren - beispielsweise menübasiert erfolgenden - Veränderungen des weiteren Parameters stets dieselbe Konsequenz hat. Möchte der Bediener die untergeordnete Funktion unter Verwendung eines anderen Werts des weiteren Parameters ausführen, kann er dies - sofern vom Dialogsystem unterstützt - menübasiert tun oder die Bedientaste entsprechend neu belegen.

Besonders vorteilhaft umgesetzt werden kann die Erfindung, indem das Dialogsystem derart ausgebildet ist, dass die aktuelle Belegung der Bedientaste auf eine Anforderungshandlung eines Bedieners hin anzeigbar ist. Der Bediener kann sich somit durch die Anforderungshandlung informieren, welche Konsequenz eine Betätigung der Bedientaste hat bzw. haben würde.

Die Anforderungshandlung kann beispielsweise in einer leichten Berührung der Bedientaste, in einem leichten Antippen der Bedientaste oder in einer Annäherung der Hand des Bedieners an die Bedientaste bestehen, wenn das Dialogsystem geeignet ist, eine solche Berührung, ein solches Antippen und/oder eine solche Annäherung zu detektieren.

Ganz besonders vorteilhaft ist eine Ausführungsform der Erfindung, bei welcher der Bediener mit einer Bedientaste, die mit der übergeordneten Funktion belegt ist, folgendermaßen interagieren kann: Auf eine erste Anforderungshandlung eines Bedieners hin wird eine Beschreibung der übergeordneten Funktion angezeigt. Beispielsweise kann hierzu textuell ausgegeben werden "Suche nach Tankstellen in Umgebung". Erst auf eine zusätzliche zweite Anforderungshandlung eines Bedieners hin wird der Wert des oben genannten zumindest einen weiteren Parameters angezeigt. Letzteres erfolgt vorzugsweise entweder im Zusammenhang mit einer Beschreibung der übergeordneten Funktion, beispielsweise "Suche nach Tankstellen in Umgebung - Umkreis der Suche: 5 km", oder im Zusammenhang mit einer Bezeichnung der untergeordneten Funktion, beispielsweise "Suche nach Tankstellen im Umkreis von 5 km um aktuelle Position".

Als erste Anforderungshandlung kann beispielsweise eine Berührung der Bedientaste definiert sein, als zweite Anforderungshandlung ein Beibehalten der Berührung über eine bestimmte Zeitspanne hinweg, z.B. für 2 Sekunden.

Vorzugsweise sind die Funktionen der vorgegebenen Menge von Funktionen, mit denen die Bedientaste belegbar ist, in einer hierarchischen Menüstruktur organisiert und wahlweise über ein multifunktionales Bedienelement auslösbar. Das multifunktionale Bedienelement kann als Dreh-/Drucksteller ausgebildet sein.

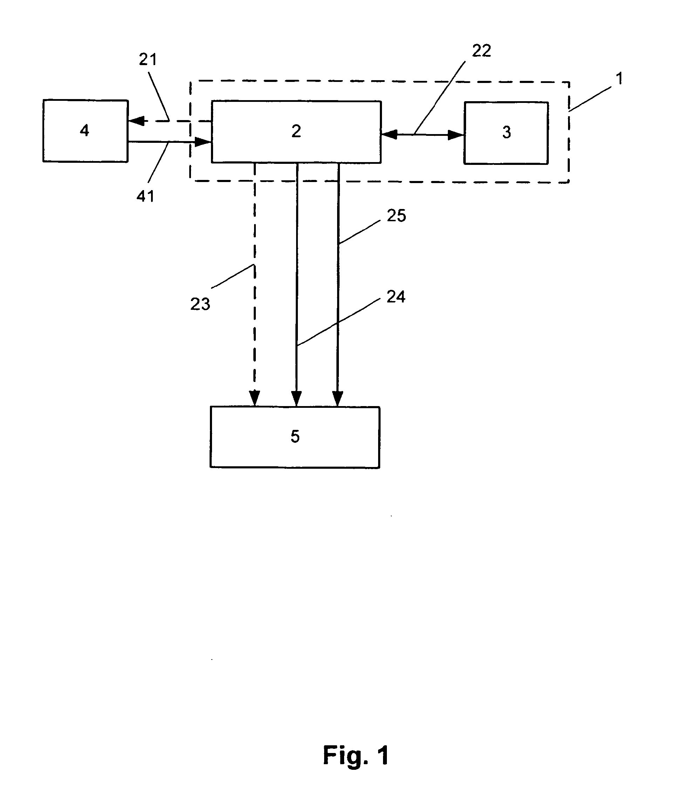

Im Folgenden wird anhand der beigefügten Zeichnung ein bevorzugtes Ausführungsbeispiel der Erfindung beschrieben. Daraus ergeben sich weitere Details, bevorzugte Ausführungsformen und Weiterbildungen der Erfindung. Es zeigt
- Fig. 1: schematisch den Signalfluss bei der Betätigung einer Bedientaste in einem Kraftfahrzeug.

Eine Bedientaste 1 in einem Kraftfahrzeug ist frei von einem Bediener mit Funktionen belegbar. Die zur Belegung verfügbaren Funktionen sind in einer hierarchischen Menüstruktur organisiert und wahlweise über ein multifunktionales Bedienelement auslösbar. Mittels des multifunktionalen Bedienelements kann der Bediener auch durch die Menüstruktur navigieren und Funktionen hervorheben. Die Belegung der Bedientaste 1 mit einer bestimmten Funktion erfolgt, indem die Bedientaste 1 vom Bediener mehrere Sekunden lang gedrückt gehalten wird, während die Funktion in einer Menüansicht hervorgehoben ist.

Wird die Bedientaste 1 mit Funktionen belegt, deren korrekte Ausführung nicht das Bekanntsein der aktuellen Fahrzeugposition erfordert, erfolgt die Zuordnung zwischen Bedientaste und Funktion in an sich bekannter Weise. Auch die Funktionsausführung bei Betätigung der Bedientaste 1 erfolgt in an sich bekannter Weise.

Fig. 1 zeigt den Sonderfall der Belegung der Bedientaste 1 mit einer übergeordneten Funktion 2, deren Ausführung das Bekanntsein der aktuellen Fahrzeugposition erfordert. Die übergeordnete Funktion 2 kann im vorliegenden Fall treffend kurz bezeichnet werden als "Suche nach Tankstellen". Aus funktionaler Sicht ist sie genau genommen zu beschreiben als "Suche nach Tankstellen in einem Umkreis mit noch näher zu definierenden Umkreisradius um die noch zu bestimmende aktuelle Position des Kraftfahrzeugs". Denn weder der Umkreis noch die aktuelle Position sind durch die übergeordnete Funktion 2 festgelegt oder gehen unmittelbar in sie ein.

Bei der Belegung der Bedientaste 1 mit der übergeordneten Funktion 2 wurde der Bedientaste jedoch neben der übergeordneten Funktion 2 selbst zusätzlich ein Wert 3 für den Umkreisradius zugeordnet. Verwendet wurde dabei als Wert 3 derjenige Wert, der vor der Belegung menübasiert vom Bediener für eine solche Suche eingestellt worden war und der zum Zeitpunkt der Belegung gültig war. Alternativ hätte der Wert 3 auch bei der Belegung interaktiv vom Bediener abgefragt werden können.

Der Wert 3 ist im vorliegenden Fall gemeinsam mit einem Zeiger auf die übergeordnete Funktion 2 an derjenigen Stelle einer Speichereinheit des Kraftfahrzeugs abgelegt, die in an sich bekannter Weise für eine Spezifikation der Belegung der Bedientaste 1 vorgesehen ist.

Der Wert 3 bleibt der Bedientaste auch dann unverändert zugeordnet, wenn vom Bediener seit der Belegung mittlerweile menübasiert ein anderer Wert für eine solche Suche eingestellt wurde.

Fig. 1 zeigt schematisch den Signalfluss bei einer Betätigung der so belegten Bedientaste 1. Wird die Bedientaste 1 betätigt, führt dies zunächst zur Ausführung der übergeordneten Funktion 2. Diese übergeordnete Funktion 2 umfasst eine Bestimmung der aktuellen Fahrzeugposition. Diese Bestimmung der aktuellen Fahrzeugposition besteht im vorliegenden Fall in der Anforderung 21 der aktuellen Fahrzeugposition von einem Navigationssystem 4 des Kraftfahrzeugs. Das Navigationssystem 4 stellt die aktuelle Position in Beantwortung der Anforderung 21 als Antwort 41 zur Verfügung.

Anschließend liest die übergeordnete Funktion 2 den Wert 3 aus der oben genannten Speichereinheit aus. In Fig. 1 ist dieses Auslesen als Doppelpfeil 22 veranschaulicht.

Wiederum anschließend ruft die übergeordnete Funktion 2 die untergeordnete Funktion 5 auf. In Fig. 1 ist dieser Aufruf als Pfeil 23 veranschaulicht.

Die untergeordnete Funktion 5 ist definiert als "Suche nach Tankstellen in einem Umkreis mit Umkreisradius X die Position Y". Sie erwartet die Übergabe der Eingangsvariablen X und Y mit dem Aufruf.

Mit dem Aufruf 23 übergibt (Pfeil 24) die übergeordnete Funktion 2 der untergeordneten Funktion 5 als Eingangsvariable X den Parameterwert für die aktuelle Position, den sie zuvor als Antwort 41 vom Navigationssystem erhalten hat.

Außerdem übergibt (Pfeil 25) die übergeordnete Funktion 2 der untergeordneten Funktion 5 mit dem Aufruf 23 als Eingangsvariable Y den Parameterwert für den Umkreis, den sie zuvor (Doppelpfeil 22) ausgelesen hat.

Die untergeordnete Funktion 5 kann nun unter Verwertung der so spezifizierten Werte für die Eingangsvariablen X und Y ausgeführt werden. Hierzu war (nach vorheriger Festlegung des Werts 3) nur ein einziger Tastendruck des Bedieners auf die Bedientaste 1 erforderlich.

## Patentansprüche

1. Dialogsystem für ein Kraftfahrzeug mit einer Mehrzahl von Bedientasten, von denen zumindest eine mit einer Funktion aus einer vorgegebenen Menge von Funktionen derart belegbar ist, dass diese Funktion bei Betätigung dieser Bedientaste ausgeführt wird,
wobei zumindest eine der Funktionen, mit denen die Bedientaste belegbar ist, als übergeordnete Funktion ausgebildet ist, bei deren Ausführung
- der aktuelle Wert zumindest eines mit zumindest einem Zustand des Kraftfahrzeugs korrelierten Parameters einer untergeordneten Funktion bestimmt wird und
- die untergeordnete Funktion in Abhängigkeit von diesem Wert ausgeführt wird, und wobei die untergeordnete Funktion in Abhängigkeit vom Wert zumindest eines weiteren Parameters ausführbar ist,
**dadurch gekennzeichnet,**
**dass** ein Wert des zumindest einen weiteren Parameters von einem Bediener einstellbar ist und dass der vom Bediener eingestellte Wert der übergeordneten Funktion und/oder der Bedientaste derart zuordenbar ist, dass der Wert bei Betätigung der Bedientaste zur Ausführung der untergeordneten Funktion zur Verfügung steht, und
**dass** bei Belegung der Bedientaste mit der übergeordneten Funktion
- auf eine erste Anforderungshandlung eines Bedieners hin eine Bezeichnung der übergeordneten Funktion angezeigt wird und
- auf eine zusätzliche zweite Anforderungshandlung eines Bedieners hin der Wert des zumindest einen weiteren Parameters angezeigt wird.

2. Dialogsystem nach Anspruch 1, **dadurch gekennzeichnet,**
**dass** die Funktionen der vorgegebenen Menge von Funktionen in einer hierarchischen Menüstruktur organisiert und wahlweise über ein multifunktionales Bedienelement auslösbar sind und
**dass** das multifunktionale Bedienelement als Dreh-/Drucksteller ausgebildet ist.

## Claims

1. A dialogue system for a motor vehicle with a plurality of operating keys, of which at least one can be assigned a function from a predetermined quantity of functions in such a way that this function is executed on actuation of this operating key, wherein at least one of the functions, which can be assigned to the operating key, is configured as a master function, upon the execution of which
- the current value of at least one parameter of a subordinate function correlated with at least one state of the motor vehicle is determined and
- the subordinate function is executed in dependence upon this value,
and wherein the subordinate function can be executed as a function of the value of at least one further parameter, **characterised in that** a value of the at least one further parameter can be adjusted by an operator and **in that** the value adjusted by the operator can be assigned to the master function and/or the operating key in such a way that the value, on actuation of the operating key, is available to execute the subordinate function, and **in that** when the master function is assigned to the operating key
- upon a first request action of an operator, a designation of the master function is displayed and
- upon an additional second request action of an operator, the value of the at least one further parameter is displayed.

2. A dialogue system according to claim 1, **characterised in that** the functions of the predetermined quantity of functions are organised in a hierarchical menu structure and can be selectively triggered by means of a multi-functional operating element and **in that** the multi-functional operating element is configured as a rotary/pressure actuator.

## Revendications

1. Système de dialogue pour un véhicule automobile équipé d'un ensemble de boutons de commande dont au moins un bouton est associé à une fonction d'un ensemble prédéterminé de fonctions de façon à exécuter cette fonction lorsque le bouton de commande est actionné,
au moins l'une des fonctions associées au bouton de commande étant une fonction principale dont l'exécution :
- définit la valeur actuelle d'au moins l'un des paramètres en corrélation avec l'état du véhicule automobile pour une fonction secondaire, et
- la fonction secondaire est définie en fonction de cette valeur, et
- la fonction secondaire est exécutée en fonction de la valeur d'au moins un autre paramètre,
système **caractérisé en ce qu'**
- une valeur d'au moins un autre paramètre est réglable par l'utilisateur, et
- la valeur réglée par l'utilisateur est associée à la fonction principale et/ou au bouton de commande de sorte que lors de l'actionnement de ce bouton de commande, cette valeur est disponible pour exécuter la fonction secondaire, et
- par association à la touche de commande de la fonction principale,
* en réponse à une première manoeuvre de demande d'un utilisateur, une indication relative à la fonction principale est affichée, et
* en réponse à une seconde manoeuvre de demande, supplémentaire d'un utilisateur, la valeur d'au moins un autre paramètre est affiché.

2. Système de dialogue selon la revendication 1,
**caractérisé en ce que**
les fonctions de l'ensemble prédéfini de fonctions sont organisées suivant une structure de menu hiérarchisée et elles peuvent être déclenchées sélectivement par un élément de commande multifonctions, et l'élément de commande multifonctions est un actionneur à poussoir/ bouton tournant.
